# EUROPEAN PATENT APPLICATION

(11) **EP 4 604 624 A1**
(43) Date of publication of application: **20.08.2025**
(21) Application number: 25155032.3
(22) Date of filing: 30.01.2025
(51) Int. Cl.: H04W 52/02, H04W 48/18

(54) **CONSIDERATION OF ENERGY IN COMMUNICATION**

(30) Priority: 15.02.2024 JP 2024021253
(71) Applicant: TOYOTA JIDOSHA KABUSHIKI KAISHA, Aichi-ken, 471-8571 (JP); KDDI Corporation, Tokyo 163-8003 (JP)
(72) Inventor: SHAO, Xiao, Toyota-shi, Aichi-ken 471-8571 (JP); OMI, Satoshi, Toyota-shi, Aichi-ken 471-8571 (JP); ITO, Akira, Toyota-shi, Aichi-ken 471-8571 (JP); YAMAMOTO, Kenichi, Tokyo, 163-8003 (JP)
(74) Representative: Cabinet Beau de Loménie

(57) **Abstract**

A system includes: a first NF (Network Function) configured to hold, for each of a plurality of user terminals, first information including conditions related to energy in communication; and a second NF configured to perform, based on the first information about a first user terminal included among the plurality of user terminals, a predetermined process related to communication of the first user terminal. The conditions related to energy in communication include at least any of a condition about energy consumption, a condition about energy efficiency, and a condition about use of renewable energy.

## Description

### BACKGROUND

### Technical Field

The present disclosure relates to a communication network system.

### Description of the Related Art

It is disclosed that the device type (device dedicated for control plane, emergency response device, or the like) of each UE (User Equipment), the identifier of a slice to be connected by the UE, information indicating services desired by the UE are held in a UDR (Unified Data Repository) as subscription of the UE (for example, Patent Document 1).

### CITATION LIST

### PATENT DOCUMENT

[Patent Document 1] Japanese Patent Laid-Open No 2023-159177

### SUMMARY OF THE INVENTION

A subject of the present disclosure is to provide a system and a method capable of enabling communication in consideration of conditions related to energy in communication for each user terminal.

An aspect of the present disclosure is a system including:
a first NF (Network Function) configured to hold, for each of a plurality of user terminals, first information including conditions related to energy in communication; and
a second NF configured to perform, based on the first information about a first user terminal included among the plurality of user terminals, a predetermined process related to communication of the first user terminal.

Another aspect of the present disclosure is a method including:
holding, by a first NF (Network Function),for each of a plurality of user terminals, first information including conditions related to energy in communication; and
performing, by a second NF, based on the first information about a first user terminal included among the plurality of user terminals, a predetermined process related to communication of the first user terminal.

According to the present disclosure, it is possible to enable communication in consideration of conditions related to energy in communication for each user terminal.

### BRIEF DESCRIPTION OF THE DRAWINGS

Fig. 1 is a diagram illustrating an example of an architecture of a 5th generation mobile communication system;
Fig. 2 is a diagram illustrating a process in consideration of Energy Related Subscription data for an UE in a communication system;
Fig. 3 is a diagram illustrating an example of information included in Energy Related Subscription data;
Fig. 4 is a diagram indicating an example of a hardware configuration of an information processing apparatus capable of operating as each of NFs and an AF in a 5G core network;
Fig. 5 is a diagram illustrating an example of functional components of an UDM and an UDR;
Fig. 6 is a diagram illustrating an example of functional components of each user NF;
Fig. 7 is an example of a flowchart of a predetermined process related to communication of an UE, by any of user NFs;
Fig. 8 is a diagram illustrating an example of a sequence of processing for updating Energy Related Subscription data of each UE;
Fig. 9 is a diagram illustrating an example of a sequence of energy-related-subscription-data-based NF selection process;
Fig. 10 is a diagram illustrating an example of a sequence of energy-related-subscription-data-based policy generation process; and
Fig. 11 is a diagram illustrating an example of a sequence of energy-related-subscription-data-based network slice selection process.

### DESCRIPTION OF THE EMBODIMENT

In the 5G (5th Generation) 3GPP (registered trademark) standards, a technology for reduction in energy consumption required for operation of a mobile communication network, that is, for improvement of energy efficiency is specified. In response thereto, users are more and more interested in energy related to communication, desiring to reduce the energy, improve the efficiency, or use renewable energy. However, since subscription data does not include an item about energy related to communication, communication in consideration of the users' demands related to communication is not performed.

In one of aspects of the present disclosure, for each user terminal, conditions related to energy in communication are registered with a core network. By the conditions being taken into consideration when a process related to communication of a user terminal is executed, it is possible to cause the communication of the user terminal to be communication in consideration of energy.

More specifically, one of the aspects of the present disclosure may be a system, the system including: a first NF (Network Function) configured to hold, for each of a plurality of user terminals, first information including conditions related to energy in communication; and a second NF configured to perform, based on the first information about a first user terminal included among the plurality of user terminals, a predetermined process related to communication of the first user terminal. The system may be, for example, a core network system of a mobile communication system of the 5G (5th Generation) or subsequent generations. The first and second NFs may be, for example, instances that serve predetermined functions in the core network of the mobile communication system. The instances of the first and second NFs may be generated, for example, by virtualized computing like a container executed on an information processing apparatus. When the system is a 5G core network system, the first NF may be, for example, a UDR (Unified Data Repository). The second NF may be an AMF (Access and Mobility Management Function), an SMF (Session Management Function), a PCF (Policy Control Function), an NSSF (Network Slice Selection Function), or the like. The system, the first NF, and the second NF, however, are not limited to the above.

According to one of the aspects of the present disclosure, the predetermined process related to communication of the first user terminal may be performed based on the first information that includes the conditions related to energy in communication of the first user terminal. Thereby, communication of the first user terminal is performed in consideration of the conditions related to energy in communication of the first user terminal in the whole system.

In one of the aspects of the present disclosure, the first information may be one of pieces of subscription data. By the first information being one of pieces of the subscription data, the conditions related to energy in communication of the first user terminal are taken into consideration when a process about communication of the first user terminal is performed based on the subscription data.

In one of the aspects of the present disclosure, the conditions related to energy in communication may include at least any of a condition about energy consumption, a condition about energy efficiency, and a condition about use of renewable energy. Each of the condition about energy consumption, the condition about energy efficiency, and the condition about use of renewable energy may be such that specifies equipment, functions, an area, or a network slice related to communication of the user terminal, or an amount of energy consumed in the entire system, energy efficiency, a rate of renewable energy, or thresholds therefor. Thereby, energy consumption, energy efficiency, and use of renewable energy are taken into consideration in communication of the first user terminal.

Further, in this case, the first information may include information indicating priority order among the condition about energy consumption, the condition about energy efficiency, and the condition about use of renewable energy. Thereby, it is possible to, in communication of the first user terminal, specify the priority order among the condition about energy consumption, the condition about energy efficiency, and the condition about use of renewable energy.

In one of the aspects of the present disclosure, the system may further include a third NF configured to transmit, for the first user terminal, a request to update the first information. When receiving the request to update the first information about the first user terminal, the first NF may update the first information about the first user terminal. Thereby, it is possible to update the first information.

In one of the aspects of the present disclosure, as the predetermined process related to communication of the first user terminal, the second NF may perform processing for selecting a fourth NF configured to perform a process related to communication of the first user terminal, among a plurality of fourth NFs, based on the first information about the first user terminal. For example, the second NF may be an AMF; and, in this case, the fourth NF may be any of an SMF, an AMF, and a PCF. For example, the second NF may be an SMF; and, in this case, the fourth NF may be any of an UPF (User Plane Function) and a PCF. The combination of the second NF and the fourth NF, however, is not limited to the above.

In one of the aspects of the present disclosure, the second NF may be a PCF. In this case, as the predetermined process, the second NF may perform processing for generating policies related to communication of the first user terminal based on the first information about the first user terminal. As the policies related to communication of the first user terminal, there are, for example, Access and Mobility related policy information, PDU Session related policy information, a PCC rule (Policy and Charging Control rule), a BDT (Background Data Transfer) policy, and the like. Since the policies are generated based on the first information about the first user terminal, for example, when a PDU session is established according to the policies, the PDU session can be established in consideration of the conditions related to energy in communication of the first user terminal.

In one of the aspects of the present disclosure, the second NF may be an NSSF. In this case, as the predetermined process, the second NF may perform processing for selecting a network slice to be used for communication of the first user terminal based on the first information about the first user terminal. It is possible to select the network slice to be used for communication of the first user terminal in consideration of the conditions related to energy in communication of the first user terminal.

As one of other aspects, the present disclosure can be identified as a method for executing the process in the system described above. The method includes: holding, by a first NF, for each of a plurality of user terminals, first information including conditions related to energy in communication; and performing, by a second NF, based on the first information about a first user terminal included among the plurality of user terminals, a predetermined process related to communication of the first user terminal. Further, as one of the other aspects, the present disclosure can be identified as: an information processing apparatus executing, for each of the first NF and the second NF in the system described above, processing therefor; a method in which each of computers corresponding to the first NF and the second NF, respectively, executes the process for each NF; a program for causing a computer to execute the method; and a non-transitory computer-readable recording medium in which the program is recorded.

In the following, embodiments of the present disclosure will be described with reference to the drawings. The configuration of the embodiments described below are examples, and the present disclosure is not limited to the configuration of the embodiments.

### <First embodiment>

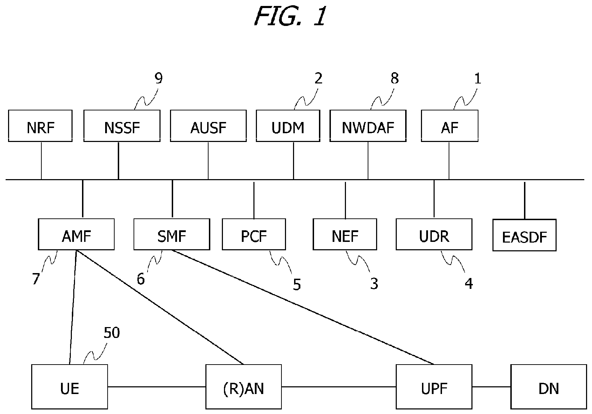

Fig. 1 is a diagram illustrating an example of an architecture of a 5th generation mobile communication system. The 5th generation mobile communication network will be hereinafter referred to as the 5G network. The 5G network includes a 5G core network (5GC) and an access network ((R)AN). To the 5G network, UE (User Equipment) 50, a DN (Data Network), and an AF 1 are connected. UE 50 is a terminal of a user (a subscriber). A RAN (Radio Access Network) is an access network to the 5GC. The RAN includes a base station (gNB).

Fig. 1 illustrates a part of components included in the 5GC. Further, in Fig. 1, components according to a first embodiment are given reference signs. In the 5G, software that implements network functions, and hardware in which the software is executed are separated with using a hardware abstraction technology. Thereby, it is possible to cause various network function software to operate on common hardware resources, without depending on a configuration of each hardware product. Fig. 1 illustrates network functions (NFs: Network Functions) included in the 5GC. Each of the plurality of NFs included in the 5GC is attained by one or more computers (information processing apparatuses) executing a program. However, any two or more NFs may be attained by a single computer.

A UPF (User Plane Function) performs routing, forwarding, packet inspection, and QoS process of a user packet. The user packet is a user plane packet transmitted and received by the UE 50.

An AMF (Access and Mobility Management Function) 7 accommodates the RAN and performs registration management, connection management, and mobility management of UEs in the 5GC. Further, the AMF 7 relays a message between an SMF 6 and the UE 50.

The SMF (Session Management Function) 6 performs management of a PDU (Protocol Data Unit) session, allocation of an IP address to the UE and management thereof, and selection and control of a UPF. The management of a PDU session includes establishment, modification, and release of the PDU session. For example, when a policy is changed, change in a PDU session occurs, and change in the QoS or the policy is applied to a UPF through the SMF 6. A PDU session is a virtual communication channel for exchanging data between the UE 50 and the DN. The DN is a data network (a cloud, the Internet, or the like) outside the 5GC.

A PCF (Policy Control Function) 5 provides policy rules for each NF to cause the NF to implement the policy rules. The policy rules include, for example, rules for QoS, filtering, routing, and accounting. In the case of registering, changing, or deleting the policy rules, it is notified to the PCF 5 first, and, for a corresponding UPF, the PCF 5 performs control such as setting, change, or deletion of the policies through the SMF 6.

A UDM (Unified Data Management) 2 performs management of subscription data, authentication information and the like about subscribers who subscribe to the provider. The subscription data includes, for example, Access and Mobility Subscription data used for registration and mobility management of the UE 50, Slice Selection Subscription data used to select a slice, SMF Selection Subscription data used to select an SMF 6, Session Management Subscription data used for establishment of a PDU session, and Energy Related Subscription data used for a process related to communication of the UE 50.

A UDR 4 stores data to be used by the UDM 2, the PCF 5, and an NEF 3 and provides search for the data. More specifically, the data held by the UDR 4 includes, for example, the subscription data, the authentication information, policy data, and the like.

The NEF 3 provides a function of safely disclosing capabilities and event information disclosed by the network functions in the 5G system to external applications such as the AF (Application Function) 1. Further, the NEF 3 provides a function of receiving information from allowed external applications into the network. The AF 1 is an application server (an external server) that provides auxiliary services other than services according to the 5GC specifications.

An NWDAF 8 provides analysis information about the inside of the network. The analysis information about the inside of the network provided by the NWDAF 8 includes, for example, communication delay, throughput, jitter, and a traffic load level in each section, and Energy Related data. The Energy Related data includes, for example, Energy Efficiency, Energy Consumption, and renewable energy ratio.

The energy consumption is an amount of energy consumed in a predetermined system. The energy consumption is, for example, indicated in joules (J) or watt-hours (Wh). The energy efficiency is, for example, a ratio of effective output to energy consumption in a predetermined system. The effective output is, for example, an amount of transmitted data, or throughput. The renewable energy ratio is a ratio of renewable energy consumption in the energy consumption in a predetermined system.

The predetermined system is, for example, an NF, a network slice, or the 5G core network. Therefore, the Energy Related data can be acquired per NF, per network slice, per 5GC core network, per NG-RAN, per UE, per PDU session, and per QoS flow.

An EASDF (Edge Application Server Discovery Function) mediates communication between the UE 50 and a DNS server.

An NRF stores and manages information about the NFs in the 5GC (for example, the AMF, the SMF, and the UPF). In response to a query related to an NF desired to be used, the NRF can reply to the query source with a plurality of NF candidates. An NSSF 9 has a function of selecting a network slice to be used by a subscriber from among network slices generated by network slicing. A network slice is a virtual network having specifications according to an application purpose. An AUSF provides a UE authentication function. The UDM holds subscription contract information and authentication information for AKA authentication.

There may be a case where a plurality of NFs of the same type are prepared in the 5GC. For example, there may be a case where one NF is prepared for each data center (a station building). Further, there may also be a case where one NF is shared among data centers. Further, there may also be a case where a plurality of NFs of the same type are provided in one data center. Correspondence relationships between NFs and data centers can be appropriately set.

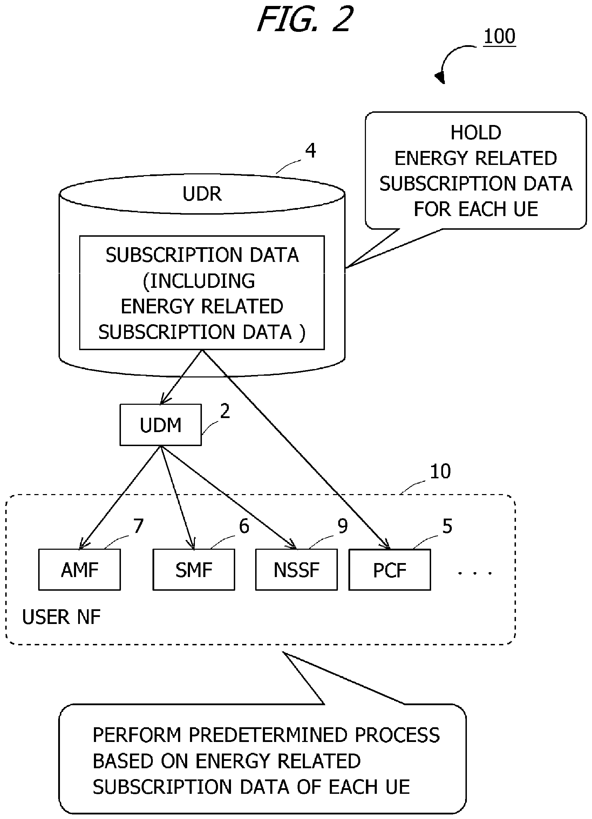

Fig. 2 is a diagram illustrating a process in consideration of Energy Related Subscription data for each UE 50 in a communication system 100. The Energy Related Subscription data is information used for the process related to communication of the UE 50. In the first embodiment, the Energy Related Subscription data of the UE 50 is held in the UDR 4 as one of the pieces of subscription data. The Energy Related Subscription data of the UE 50 is stored into the UDR 4 by an operator, for example, when a contract of subscription of the UE 50 to the communication system 100 is concluded. The Energy Related Subscription data may be specified by a user who owns the UE 50, that is, a contractor of subscription to the communication system 100 or may be set in advance according to a contract plan.

The Energy Related Subscription data of the UE 50 is used by user NFs 10, for example, the AMF 7, the SMF 6, the PCF 5, and the NSSF 9. That is, in the case of executing the predetermined process related to communication of the UE 50, the user NFs 10 acquire the Energy Related Subscription data of the UE 50 from the UDR 4, and execute the predetermined process based on the Energy Related Subscription data of the UE 50. The PCF 5 can directly access the UDR 4 to acquire the Energy Related Subscription data of the UE 50. On the other hand, it is not possible for the AMF 7, the SMF 6, and the NSSF 9 to directly access the UDR 4 due to specification of 3GPP and, therefore, access the UDR 4 via the UDM 2 to acquire the Energy Related Subscription data of the UE 50.

As the predetermined process, for example, NF selection process for selecting an NF to perform the process related to communication of the UE 50, a process for generating policies related to communication of the UE 50, and slice selection process for selecting a network slice to be used for communication of the UE 50 are included. As the NF selection process, for example, a SMF selection process in which the AMF 7 selects an SMF 6 to manage a PDU session of the UE 50, a PCF selection process in which the AMF 7 selects a PCF 5 to manage policies about the PDU session of the UE 50, a AMF selection process in which the AMF 7 selects a new AMF 7 to take over the process related to communication of the UE 50, a UPF selection process in which the SMF 6 selects a UPF to allocate the PDU session of the UE 50, a PCF selection process in which the SMF 6 selects a PCF 5 to manage policies about the PDU session of the UE 50, and the like are included. The NF selection process, however, is not limited to the above, and, for example, processes for any of the user NFs 10 selecting an NWDAF to acquire network analysis information such as Energy Related data may be included.

The policy generation process is processing in which the PCF 5 generates the policies related to communication of the UE 50. As the policies generated by the PCF 5, there are, for example, Access and Mobility related policy information, PDU Session related policy information, a PCC rule (Policy and Charging Control rule), a BDT (Background Data Transfer) policy, and the like.

The slice selection process is processing in which the NSSF 9 selects a network slice to be used for communication of the UE 50. The predetermined process performed based on the Energy Related Subscription data, however, is not limited to the above, and any processes related to communication of the UE 50 can be considered as the predetermined process.

The predetermined process related to communication of the UE 50 is independently executed by each user NF 10. The predetermined process related to communication of the UE 50 by each user NF 10 occurs, for example, during execution of a registration procedure, a PDU session establishment procedure, a PDU session modification procedure, a handover procedure, or the like.

In the first embodiment, it is possible to, by the predetermined process related to communication of the UE 50 by each user NF 10 being performed based on the Energy Related Subscription data of the UE 50, cause the communication of the UE 50 to be performed in consideration of energy efficiency and the like. The UDR 4 is an example of "a first NF". Each NF included among the user NFs 10 is an example of "a second NF".

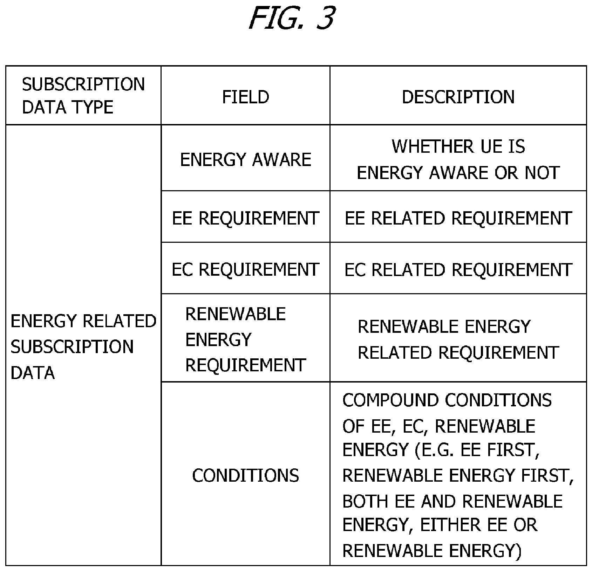

Fig. 3 is a diagram illustrating an example of information included in the Energy Related Subscription data. In the first embodiment, the Energy Related Subscription data is one of the pieces of the subscription data. The Energy Related Subscription data includes fields for, for example, Energy-Aware, EE Requirement, EC Requirement, Renewable Energy Requirement, and Conditions.

In the Energy-Aware field, information indicating whether the UE is an energy-aware UE or not is included. An energy-aware UE is such a UE that, for energy related to communication, requirements for energy efficiency, energy consumption, a renewable energy ratio, and the like are set. The information indicating whether the UE is an energy-aware UE or not may be, for example, a flag or a code.

In the EE Requirement field, a requirement for energy efficiency in communication of the UE 50 is included. The requirement for energy efficiency in communication of the UE 50 is set, for example, to be 50% or higher.

In the EC Requirement field, a requirement for energy consumption in communication of the UE 50 is included. The requirement for energy consumption in communication of the UE 50 is set, for example, to be 100Wh or lower.

In the Renewable Energy Requirement field, a requirement for a renewable energy use ratio in communication of the UE 50 is included. The requirement for renewable energy use ratio in communication of the UE 50 is set, for example, to be 30% or higher.

In the Conditions field, information indicating priority order among the EE requirement, the EC requirement, and the renewable energy requirement is stored. The information indicating priority order among the EE requirement, the EC requirement, and the renewable energy requirement indicates, for example, any of the following: the EE requirement being to be given top priority; the renewable energy requirement being to be given top priority; both of the EE requirement and the renewable energy requirement being to be prioritized; and any of the EE requirement and the renewable energy requirement being to be prioritized. The information indicating priority order among the EE requirement, the EC requirement, and the renewable energy requirement may be represented, for example, by a flag or a code.

The information included in the Energy Related Subscription data illustrated in Fig. 3 is an example, and the information included in the Energy Related Subscription data is not limited to the example illustrated in Fig. 3. Further, the name of each field of the Energy Related Subscription data can be appropriately changed according to each embodiment. Hereinafter, the EE requirement, the EC requirement, and the renewable energy requirement will be collectively referred to as the energy requirements. The energy requirements are an example of "conditions related to energy in communication". The information included in the Conditions field of the Energy Related Subscription data is an example of "information indicating priority order among the condition about energy consumption, the condition about energy efficiency, and the condition about use of renewable energy".

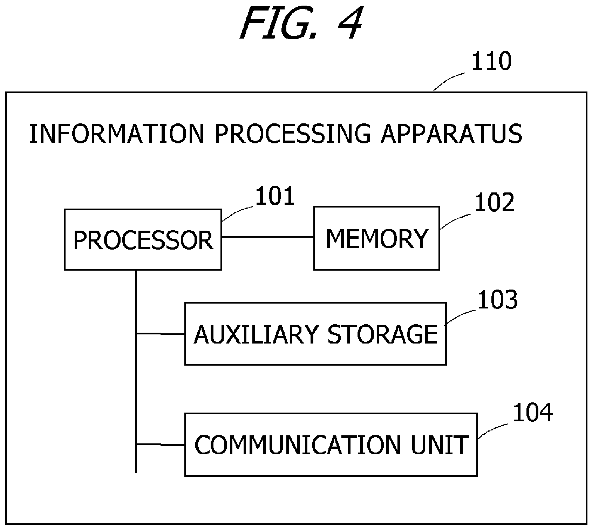

Fig. 4 is a diagram indicating an example of a hardware configuration of an information processing apparatus 110 capable of operating as each of the NFs and the AF 1 in the 5G core network. The information processing apparatus 110 may be an information processing apparatus (a computer) such as a personal computer (PC), a work station (WS), or a server machine. The information processing apparatus 110 may be an aggregate (a crowd) of one or more computers. Each of the NFs and the AF 1 in the 5G core network may be an apparatus equipped with an electrical circuit such as a dedicated FPGA (Field-Programmable Gate Array) or ASIC (Application Specific Integrated Circuit) that executes corresponding processing.

The information processing apparatus 110 includes a processor 101, a memory 102, an auxiliary storage 103, and a communication unit 104 as hardware components. The memory 102 and the auxiliary storage 103 are computer-readable recording media. The processor 101, the auxiliary storage 103, and the communication unit 104 are electrically connected via a bus.

The auxiliary storage 103 stores programs, each of which is used to operate as any of the NFs and the AF 1 in the 5G core network, and data used by the processor 101 at the time of executing each program. The auxiliary storage 103 is, for example, an EPROM (Erasable Programmable ROM), a hard disk drive, or an SSD (Solid State Drive). The programs held in the auxiliary storage 103 are, for example, an operating system (OS) and control programs for the corresponding NFs or the AF.

The memory 102 is a memory that provides a storage area where the programs stored in the auxiliary storage 103 are loaded and a work area for the processor 101, and is used as a buffer. The memory 102 includes semiconductor memories, for example, a ROM (Read Only Memory) and a RAM (Random Access Memory).

By loading the OS and a program related to any of the NFs and the AF 1 in the 5G core network, which are held in the auxiliary storage 103, to the memory 102 and executing the OS and the program, the processor 101 executes processing corresponding to the NF or the AF 1 in the 5G core network. The processor 101 is, for example, a CPU or a DSP (Digital Signal Processor). The number of processors 101 is not limited to one, and a plurality of processors 101 may be provided.

The communication unit 104 is, for example, an NIC (Network Interface Card) or an optical line interface. The communication unit 104 may be, for example, a wireless communication circuit connected to a wireless network such as a wireless LAN. The hardware configuration of the information processing apparatus 110 that performs the functions of each NF and the AF 1 in the 5G core network is not limited to the configuration illustrated in Fig. 4.

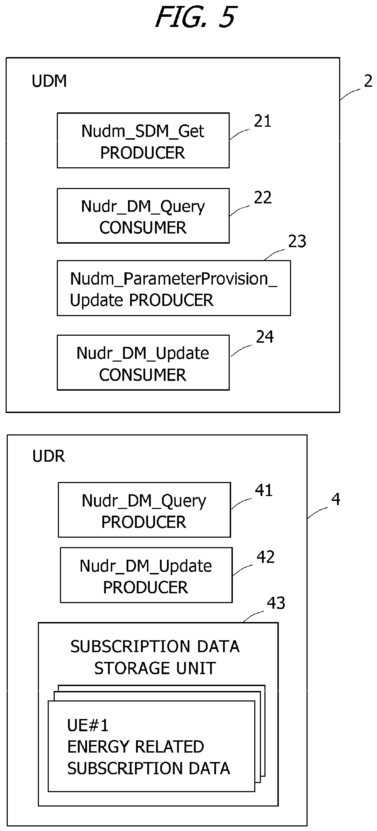

Fig. 5 is a diagram illustrating an example of functional components of the UDM 2 and the UDR 4. In Fig. 5, among functional components of the UDM 2 and the UDR 4, functional components related to the first embodiment are extracted and illustrated.

The UDM 2 includes an Nudm_SDM_Get producer 21, an Nudr_DM_Query consumer 22, an Nudm_ParameterProvision_Update producer 23, and an Nudr_DM_Update consumer 24 as the functional components. Processing of each of these functional components is achieved by the processor 101 of the information processing apparatus 110, which operates as the UDM 2, executing a predetermined program held in the auxiliary storage 103.

The Nudm_SDM_Get producer 21 is an API for a producer of an Nudm_SDM_Get service. The Nudm_SDM_Get producer 21 receives an Nudm_SDM_Get request, which is a request to acquire subscription data, from the SMF 6, the AMF 7, or the NSSF 9. Together with the Nudm_SDM_Get request, identification information about a target UE and information indicating the type of the subscription data, which specify the acquisition target subscription data, are also received. As subscription data types, there are, for example, Access and Mobility subscription data, Slice Selection Subscription data, SMF Selection subscription data, Session Management Subscription data, and Energy Related Subscription data used for the process related to communication of each UE 50.

When receiving the Nudm_SDM_Get request, the Nudm_SDM_Get producer 21 notifies the Nudr_DM_Query consumer 22 thereof. When the specified subscription data is inputted from the Nudr_DM_Query consumer 22, the Nudm_SDM_Get producer 21 transmits the specified subscription data as a response to the Nudm_SDM_Get request.

The Nudr_DM_Query consumer 22 is an API for a consumer of an Nudr_DM_Query service. When receiving the notification of having received the Nudm_SDM_Get request, from the Nudm_SDM_Get producer 21, the Nudr_DM_Query consumer 22 transmits an Nudr_DM_Query request that requests acquisition of data, to the UDR 4. Together with the Nudr_DM_Query request, for example, identification information about a target UE and the information indicating the type of the subscription data, which specify the acquisition target subscription data, are also transmitted.

The Nudr_DM_Query consumer 22 acquires the specified subscription data from the UDR 4, as a response to the Nudr_DM_Query request. The Nudr_DM_Query consumer 22 outputs the subscription data received from the UDR 4, to the Nudm_SDM_Get producer 21.

The Nudm_ParameterProvision_Update producer 23 is an API for a producer of an Nudm_ParameterProvision_Update service. The Nudm_ParameterProvision_Update producer 23 receives an Nudm_ParameterProvision_Update request, which is a request to update subscription data, from the NEF 3. Together with the Nudm_ParameterProvision_Update request, for example, identification information about a target UE, information indicating the type of the subscription data to be updated, and the content of update of the subscription data are also received. When receiving the Nudm_ParameterProvision_Update request, the Nudm_ParameterProvision_Update producer 23 notifies the Nudr_DM_Update consumer 24 thereof. When receiving a notification of a result of the update of the subscription data from the Nudr_DM_Update consumer 24, the Nudm_ParameterProvision_Update producer 23 transmits the result of the update of the subscription data to the NEF 3 as a response to the Nudm_ParameterProvision_Update request.

The Nudr_DM_Update consumer 24 is an API for a consumer of an Nudr_DM_Update service. When receiving the notification of having received the Nudm_ParameterProvision_Update request, from the Nudm_ParameterProvision_Update producer 23, the Nudr_DM_Update consumer 24 transmits an Nudr_DM_Update request, which is a request to update the subscription data, to the UDR 4. Together with the Nudr_DM_Update request, for example, identification information about a target UE, information indicating the type of the subscription data to be updated, and the content of the update of the subscription data are also transmitted. When receiving a result of the update of the subscription data from the UDR 4 as a response to the Nudr_DM_Update request, the Nudr_DM_Update consumer 24 outputs the result of the update of the subscription data to the Nudm_ParameterProvision_Update producer 23 as a response to the Nudm_ParameterProvision_Update request.

The UDR 4 includes an Nudr_DM_Query producer 41, an Nudr_DM_Update producer 42, and a subscription data storage unit 43 as functional components. Processing of these functional components is achieved by the processor 101 of the information processing apparatus 110, which operates as the UDR 4, executing programs for the APIs of the services of the components, respectively.

The Nudr_DM_Query producer 41 is an API for a producer of the Nudr_DM_Query service. The Nudr_DM_Query producer 41 receives an Nudr_DM_Query request, which is a request to acquire data, from the UDM 2 or the PCF 5. Together with the Nudr_DM_Query request, for example, identification information about a target UE and information indicating the type of subscription data, which specify the acquisition target subscription data, are also received. When receiving the Nudr_DM_Query request, the Nudr_DM_Query producer 41 reads out the specified subscription data from the subscription data storage unit 43. The Nudr_DM_Query producer 41 transmits the subscription data read out from the subscription data storage unit 43, to the UDM 2 as a response to the Nudr_DM_Query request.

The Nudr_DM_Update producer 42 is an API for a producer of an Nudr_DM_Update service. The Nudr_DM_Update producer 42 receives an Nudr_DM_Update request from the UDM 2. Together with the Nudr_DM_Update request, for example, identification information about a target UE, information indicating the type of subscription data to be updated, and the content of update of the subscription data are also received. When receiving the Nudr_DM_Update request, the Nudr_DM_Updat producer 42 updates the target subscription data in the subscription data storage unit 43 with the received content of the update. The Nudr_DM_Update producer 42 transmits a result of the update of the subscription data to the UDM 2 as a response to the Nudr_DM_Update request.

The subscription data storage unit 43 holds the subscription data of all the UEs 50 subscribing to the communication system 100. The subscription data storage unit 43 is created in the auxiliary storage 103 of the information processing apparatus 110 which operates as the UDR 4.

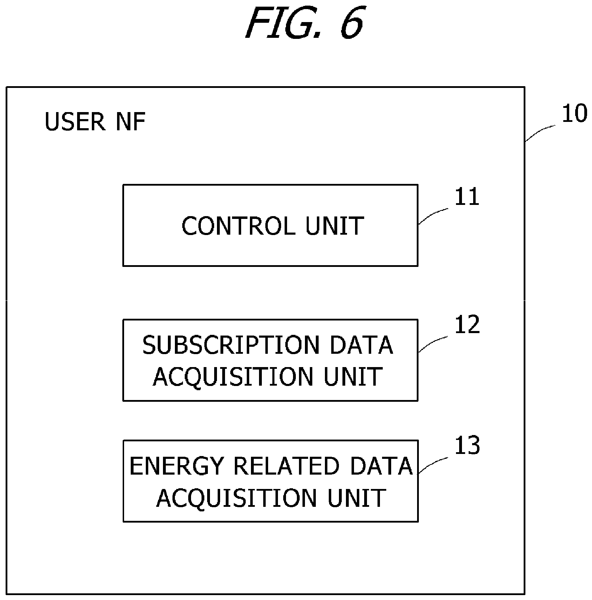

Fig. 6 is a diagram illustrating an example of functional components of each user NF 10. The user NF 10 includes a control unit 11, a subscription data acquisition unit 12, and an energy related data acquisition unit 13 as the functional components. Processing of each of the control unit 11, the subscription data acquisition unit 12, and the energy related data acquisition unit 13 is achieved by the processor 101 of the information processing apparatus 110, which operates as each user NF 10, executing a predetermined program held in the auxiliary storage 103.

The control unit 11 controls the predetermined process related to communication of the UE 50. The subscription data acquisition unit 12 acquires subscription data held in the UDR 4 according to an instruction from the control unit 11. In the first embodiment, the subscription data acquisition unit 12 acquires at least Energy Related Subscription data. The energy related data acquisition unit 13 acquires Energy Related data according to an instruction from the control unit 11. The Energy Related data is acquired, for example, from the NWDAF 8, an NF targeted by collection of the Energy Related data, or other NF that collects Energy Related data. In the first embodiment, a description is made on the assumption that the energy related data acquisition unit 13 acquires the Energy Related data from the NWDAF.

When the user NF 10 is the AMF 7, the control unit 11 executes, for example, the SMF selection process, the PCF selection process, and the AMF selection process as the predetermined process related to communication of the UE 50. When the user NF 10 is the SMF 6, the control unit 11 executes, for example, the UPF selection process and the PCF selection process as the predetermined process related to communication of the UE 50. When the user NF 10 is the NSSF 9, the control unit 11 executes, for example, the network slice selection process as the predetermined process related to communication of the UE 50.

When the user NF 10 is the AMF 7, the SMF 6, or the NSSF 9, the subscription data acquisition unit 12 is an API for a consumer of the Nudm_SDM_Get service, and the subscription data acquisition unit 12 transmits the Nudm_SDM_Get request to the UDM 2 together with identification information about the UE 50 and information indicating the Energy Related Subscription data as the type of the subscription data. When the user NF 10 is the AMF 7, the SMF 6, or the NSSF 9, the energy related data acquisition unit 13 is an API for a consumer of the Nnwdaf_AnalyticsInfo service, and the energy related data acquisition unit 13 transmits an Nnwdaf_AnalyticsInfo request to the NWDAF 8 together with information indicating that the acquisition target is the Energy Related data.

When the user NF 10 is the PCF 5, the control unit 11 executes, for example, the policy generation process as the predetermined process related to communication of the UE 50. When the user NF 10 is the PCF 5, the subscription data acquisition unit 12 is the API for a consumer of the Nudr_DM_Query service, and the subscription data acquisition unit 12 transmits an Nudr_DM_Query request to the UDR 4 together with the identification information about the UE 50 and information indicating Energy Related Subscription data as the type of the subscription data.

In Fig. 6, functional components related to the processing of the communication system 100 are extracted and illustrated as the functional components of each user NF 10, and the functional components of each user NF 10 are not limited to the example illustrated in Fig. 6.

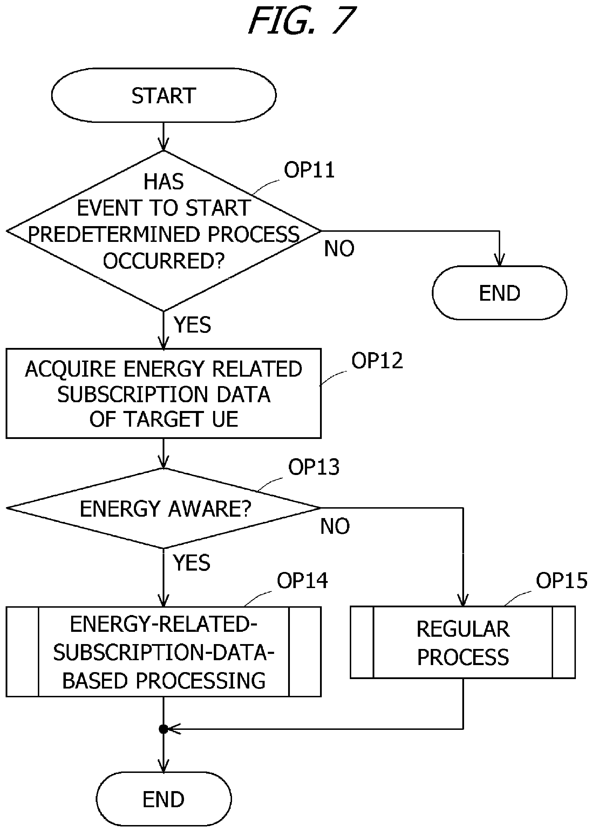

Fig. 7 illustrates an example of a flowchart of the predetermined process related to communication of the UE 50, by any of the user NFs 10. The process illustrated in Fig. 7 is repeatedly executed while the user NF 10 is operating. Though the subject of execution of the process illustrated in Fig. 7 is the processor 101 of the information processing apparatus 110, which operates as the user NFs 10, a description will be made, for convenience, with each functional component as the subject.

At OP11, the control unit 11 determines whether an event that triggers start of the predetermined process related to communication of the UE 50 has occurred or not. Events that trigger the SMF selection process by the AMF 7 as one of the user NFs 10 include, for example, establishment of a PDU session of the UE 50, modification of settings for the PDU session, handover, and the like. For example, when, in modification of setting for the PDU session, the current SMF that manages the target PDU session cannot support parameters about session management after the modification, the SMF selection process by the AMF 7 is performed. For example, when, in handover, modification of parameters about session management is requested depending on a handover destination base station or AMF 7, the SMF selection process by the AMF 7 is performed.

Events that trigger the PCF selection process by the AMF 7 as one of the user NFs 10 include, for example, initial registration of the UE 50 with the communication system, and AMF relocation in a registration procedure about the UE 50 and the handover procedure. Events that trigger the AMF selection process by the AMF 7 as one of the user NFs 10 include, for example, handover accompanied by AMF relocation.

The AMF relocation is to switch an AMF that is responsible for access and mobility management of the UE 50 from a source AMF to a target AMF. The AMF relocation occurs, for example, due to registration of the UE 50 with the communication system 100, change in UE registration information (including re-registration and re-configuration), and handover. The AMF relocation includes, for example, processing for selecting a target AMF by a source AMF and processing for selecting an NF, such as the PCF, the SMF, the NSSF, or the NWDAF, by the target AMF. The above processing is not necessarily performed in the AMF relocation. For example, in the handover procedure, the target AMF may be determined by an NF other than the source AMF, the NG-RAN, or the like.

Events that trigger the PCF selection process by the SMF 6 as one of the user NFs 10 include, for example, PDU session establishment and modification. Events that trigger the UPF selection process by the SMF 6 as one of the user NFs 10 include, for example, PDU session establishment and modification, handover, PDU session modification, addition or deletion of local breakout settings, and ULCL (Uplink Classifier)/branching point switching. The local breakout is to forward a part of communication of a PDU session toward an external DN (Data Network) to an edge server on a local DN (Data Network) to cause the edge server to perform processing thereof.

Events that trigger the policy generation process by the PCF 5 as one of the user NFs 10 include, for example, UE 50 registration processing, establishment and modification of a PDU session, sharing of information from the NWDAF 8 due to occurrence of congestion or the like, and sharing of information from an external AF due to modification of policy related parameters. Events that trigger the network slice selection process by the NSSF 9 as one of the user NFs 10 are the UE 50 registration processing, establishment and modification of a PDU session, network slice relocation, and the like. The network slice relocation occurs, for example, in a case where congestion occurs in a slice being used by the UE 50 and a case where a handover destination AMF does not support a network slice being used by the UE 50. Events that trigger start of the predetermined process related to communication of the UE 50 are not limited to the above events, and all such events that trigger start of each process related to communication of each UE 50 specified in the 3GPP standard are included.

When an event that triggers start of the predetermined process related to communication of a UE 50 occurs (OP11: YES), the process proceeds to OP12. When such an event that triggers start of the predetermined process has not occurred (OP11: NO), the process illustrated in Fig. 7 ends.

At OP12, the control unit 11 instructs the subscription data acquisition unit 12 to acquire Energy Related Subscription data of the UE 50, and acquires the Energy Related Subscription data of the UE 50 from the subscription data acquisition unit 12. When receiving the instruction from the control unit 11, the subscription data acquisition unit 12 transmits a request to acquire the Energy Related Subscription data of the UE 50 to the UDM 2 (when the user NF 10 is the SMF 6, the AMF 7, or the NSSF 9) or the UDR 4 (when the user NF 10 is the PCF 5) and receives the Energy Related Subscription data of the UE 50 from the UDM 2 or the UDR 4.

At OP13, the control unit 11 determines whether the UE 50 is an energy-aware UE or not based on the Energy Related Subscription data of the UE 50. When the UE 50 is an energy-aware UE (OP13: YES), the process proceeds to OP14.

At OP14, the control unit 11 executes the predetermined process related to communication of the UE 50, based on the Energy Related Subscription data of the UE 50. More specifically, the control unit 11 executes the predetermined process such that the energy requirements included in the Energy Related Subscription data of the UE 50 are satisfied. If none of the requirements for energy efficiency, energy consumption, and renewable energy, which are the energy requirements for the UE 50, is satisfied, the control unit 11 executes the predetermined process such that values close to thresholds set in the requirements are obtained. To perform the predetermined process related to communication of the UE 50 based on the Energy Related Subscription data of the UE 50 will be hereinafter referred to as energy-related-subscription-data-based process. After that, the process illustrated in Fig. 7 ends.

When the UE 50 is not an energy-aware UE (OP13: NO), the process proceeds to OP15. At OP15, the control unit 11 executes regular process related to communication of the UE 50 without using the Energy Related Subscription data of the UE 50. After that, the process illustrated in Fig. 7 ends.

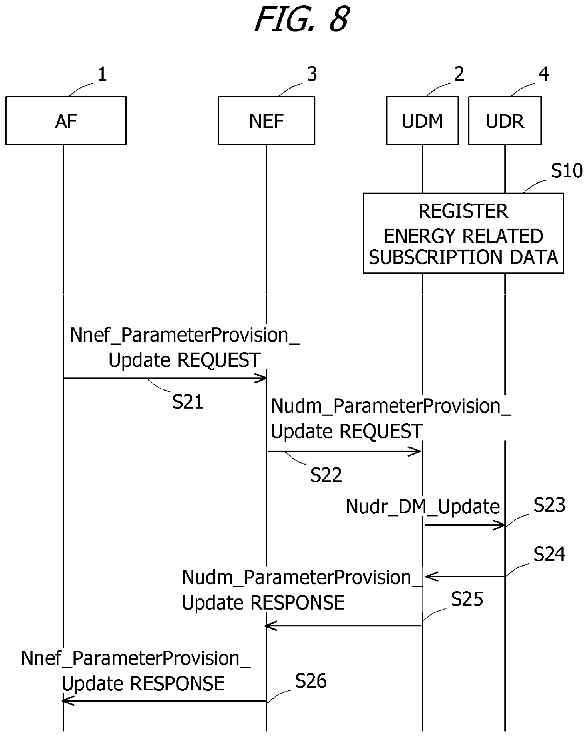

Fig. 8 is a diagram illustrating an example of a sequence of processing for updating the Energy Related Subscription data of each UE 50. At S10, for example, a contract of subscription to the communication system 100 with the user of the UE 50 is concluded, and subscription data of the UE 50 is registered with the UDM 2 and the UDR 4 by an operator of the communication system 100, with content corresponding to a contract plan or the like. The subscription data of the UE 50 includes Energy Related Subscription data of the UE 50.

At S21, an Nnef_ParameterProvision_Update request message that requests to update the Energy Related Subscription data of the UE 50 is transmitted to the NEF 3 from an administrator of the communication system 100 or an AF 1 of a third party. Together with the Nnef_ParameterProvision_Update request message, for example, identification information about the UE 50, "Energy Related Subscription data", which is a code indicating being a request to update the Energy Related Subscription data, and the content of update of the Energy Related Subscription data are also transmitted. The identification information about the UE 50 transmitted together with the Nnef_ParameterProvision_Update request message is, for example, a GPSI or an External Group ID. The "Energy Related Subscription data", which is a code indicating being a request to update the Energy Related Subscription data and which is transmitted together with the Nnef_ParameterProvision_Update request message is an example in the first embodiment and may have another name.

At S22, the NEF 3 receives the Nnef_ParameterProvision_Update request message from the AF 1 and transmits an Nudm_ParameterProvision_Update request message that requests to update the Energy Related Subscription data of the UE 50, to the UDM 2. Together with the Nudm_ParameterProvision_Update request message, for example, the identification information about the UE 50, "Energy Related Subscription data", which is a code indicating being a request to update the Energy Related Subscription data, and the content of update of the Energy Related Subscription data are also transmitted.

At S23, the UDM 2 receives the Nudm_ParameterProvision_Update request message from the NEF 3 and transmits an Nudr_DM_Update request message to the UDR 4. The UDM 2 acquires a SUPI (SUbscription Permanent Identifier) of the UE 50 from the identification information about the UE 50 (for example, a GPSI) received together with the Nudm_ParameterProvision_Update request message. Together with the Nudr_DM_Update request message, for example, the SUPI of the UE 50, "Energy Related Subscription data", which is a code indicating being a request to update the Energy Related Subscription data, and the content of update of the Energy Related Subscription data of the UE 50 are transmitted.

At S24, the UDR 4 receives the Nudr_DM_Update request message from the UDM 2, updates the Energy Related Subscription data of the UE 50 with the content of update received from the UDM 2, and transmits a result of the update to the UDM 2 as an Nudr_DM_Update response message. The result of the update of the Energy Related Subscription data of the UE 50 indicates either success or failure.

At S25, the UDM 2 receives the Nudr_DM_Update response message from the UDR 4 and transmits an Nudm_ParameterProvision_Update response message that includes the result of the update of the Energy Related Subscription data of the UE 50, to the NEF 3.

At S26, the NEF 3 receives the Nudm_ParameterProvision_Update response message from the UDM 2 and transmits an Nnef_ParameterProvision_Update response message that includes the result of the update of the Energy Related Subscription data of the UE 50, to the AF 1. Thereby, the processing for updating the Energy Related Subscription data of the UE 50 ends.

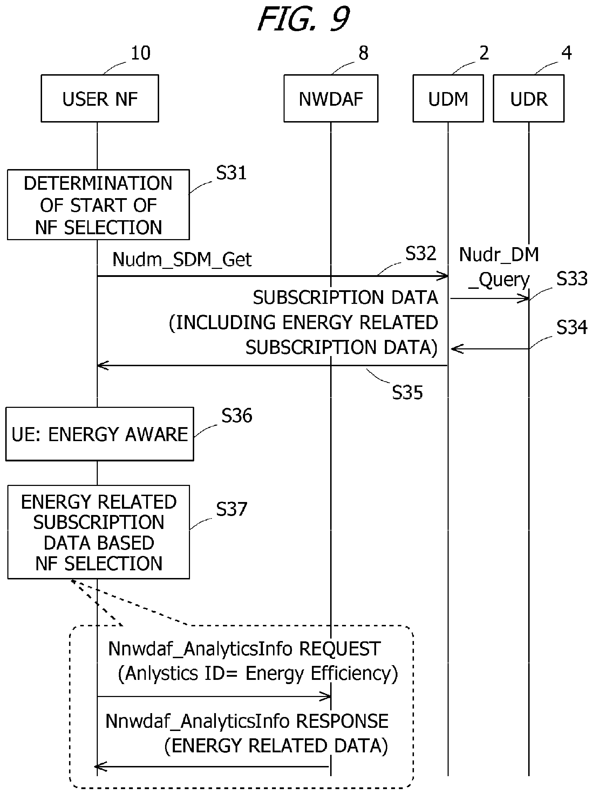

Fig. 9 is a diagram illustrating an example of a sequence of energy-related-subscription-data-based NF selection process. In the example illustrated in Fig. 9, the user NF 10 is, for example, the AMF 7 or the SMF 6. When the user NF 10 is the AMF 7, the NF selection process is, for, example, the SMF selection process, the PCF selection process, and the AMF selection process. When the user NF 10 is the SMF 6, the NF selection process is, for, example, the UPF selection process and the PCF selection process.

At S31, the user NF 10 detects occurrence of an event that triggers start of the NF selection process, and determines to start the NF selection process (Fig. 7, OP11: YES). Events that trigger start of the NF selection process include, for example, the following.

The events that trigger start of the PCF selection process when the user NF 10 is the AMF 7 include, for example, initial registration of a UE 50 with the communication system 100 and AMF relocation in the procedure for registering the UE 50. More specifically, for example, by receiving a registration request that includes "Initial Registration" as a registration type, from the UE 50, the AMF 7 detects occurrence of initial registration of the UE 50 or occurrence of AMF relocation in the procedure for registering the UE 50, and determines to start the PCF selection process.

Events that trigger start of the SMF selection process when the user NF 10 is the AMF 7 include, for example, establishment of a PDU session of the UE 50. For example, by receiving a PDU session establishment request from the UE 50, the AMF 7 detects occurrence of establishment of a PDU session of the UE 50. Events that trigger start of the AMF selection process when the user NF 10 is the AMF 7 include, for example, AMF relocation in the handover procedure. The AMF 7 detects occurrence of AMF relocation, for example, when handover of the UE 50 is requested by the RAN and determines that it is not possible for the AMF 7 itself to continue providing a service for the UE 50.

Events that trigger start of the PCF selection process when the user NF 10 is the SMF 6 include, for example, establishment and modification of a PDU session of the UE 50. Events that trigger start of the UPF selection process when the user NF 10 is the SMF 6 include, for example, establishment of a PDU session of the UE 50. For example, by receiving an Nsmf_PDUSession_CreateSMContext/UpdateSMContext request message that includes a PDU session establishment request from the UE 50, from the AMF 7, the SMF 6 detects occurrence of a procedure for establishing a PDU session of the UE 50.

At S32, the user NF 10 transmits an Nudm_SDM_Get request message, which is a request to acquire subscription data, to the UDM 2 in order to acquire Energy Related Subscription data of the UE 50. Together with the Nudm_SDM_Get request message, identification information (SUPI) about the UE 50 and information indicating that the type of the acquisition target subscription data is Energy Related Subscription data are also transmitted.

At S33, the UDM 2 receives the Nudm_SDM_Get request message from the user NF 10 and transmits an Nudr_DM_Query request message, which is a request to acquire the subscription data, to the UDR 4. Together with the Nudr_DM_Query request message, the identification information (SUPI) about the UE 50 and the information indicating that the type of the acquisition target subscription data is Energy Related Subscription data are also transmitted. At S34, the UDR 4 receives the Nudr_DM_Query request message from the UDM 2 and transmits the Energy Related Subscription data of the UE 50 to the UDM 2 together with the Nudr_DM_Query response message.

At S35, the UDM 2 receives the Energy Related Subscription data of the UE 50 from the UDR 4 together with the Nudr_DM_Query response message, and transmits the Energy Related Subscription data of the UE 50 to the user NF 10 together with an Nudm_SDM_Get response message. The user NF 10 receives the Energy Related Subscription data of the UE 50 from the UDM 2 (Fig. 7, OP12).

At S36, the user NF 10 determines that the UE 50 is an energy-aware UE from the Energy Related Subscription data of the UE 50 (Fig. 7, OP13: YES). At S37, the user NF 10 executes the NF selection process based on the Energy Related Subscription data of the UE 50 (Fig. 7, OP14).

In the NF selection process, the user NF 10 queries the NRF to acquire candidates for a selection target NF. The user NF 10 selects an NF to be used for communication of the UE 50 from among the candidate NFs acquired from the NRF.

When Energy Related data of the selection target NF is requested in the NF selection process, the user NF 10 transmits an Nnwdaf_AnalyticsInfo request message to the NWDAF 8 to acquire the Energy Related data in the first embodiment. The Nnwdaf_AnalyticsInfo request message includes "Energy Efficiency" as an Analystics ID, which is an energy related data acquisition request. The user NF 10 receives the Energy Related data from the NWDAF 8 together with an Nnwdaf_AnalyticsInfo response message.

In the example illustrated in Fig. 9, such an NF that satisfies the energy requirements included in the Energy Related Subscription data of the UE 50 is selected by the user NF 10 as an NF to be used for communication of the UE 50. For example, by each of the NWDAF 8 and the AMF 7 independently executing the energy-related-subscription-data-based NF selection process as the user NF 10, communication of the UE 50 becomes such communication that satisfies the energy requirements included in the Energy Related Subscription data of the UE 50. The NF selection process is not limited to that exemplified in the example illustrated in Fig. 9. Further, the user NF 10 which performs the NF selection process is not limited to the AMF 7 and the SMF 6. For example, at the time of transmitting a network analysis information acquisition request to the NWDAF 8, the user NF 10 may select an NWDAF 8 to be the request destination, based on the Energy Related Subscription data of the UE 50.

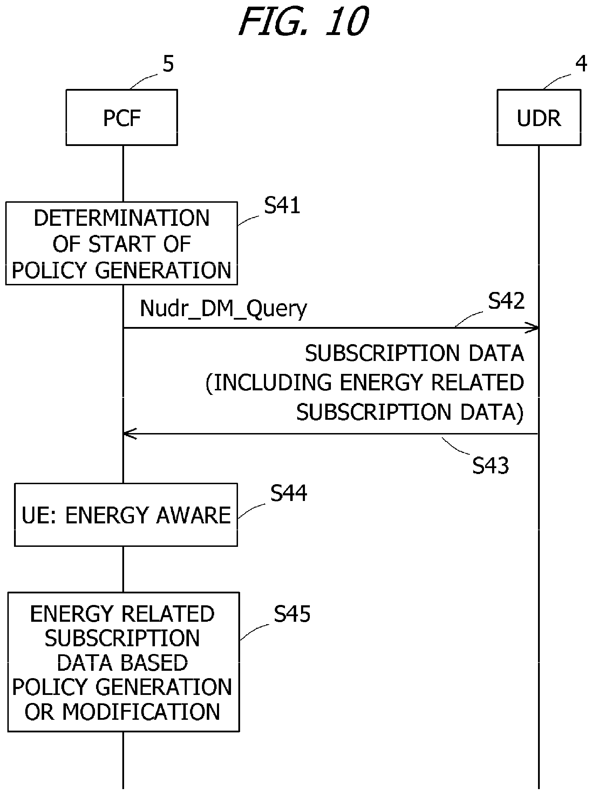

Fig. 10 is a diagram illustrating an example of a sequence of energy-related-subscription-data-based policy generation process. In the example illustrated in Fig. 10, the user NF 10 is, for example, the PCF 5. At S41, the PCF 5 determines to perform the policy generation process (Fig. 7, OP11: YES). Events that trigger start of the policy generation process include, for example, reception of an Npcf_AMPolicyControl_Create request, which is a request to share and a request to update, from the AMF 7 and reception of an Npcf_SMPolicyControl_Create request from the SMF 6, in the UE 50 registration procedure, the PDU session establishment procedure, and the handover procedure. The events that trigger start of the policy generation process by the PCF 5, however, are not limited to the above.

At S42, in order to acquire subscription data of a UE 50 that includes Energy Related Subscription data, the PCF 5 transmits the Nudr_DM_Query request message, which is a request to acquire the subscription data, to the UDR 4. Together with the Nudr_DM_Query request message, identification information (SUPI) about the UE 50 and information indicating that the type of the acquisition target subscription data is Energy Related Subscription data are also transmitted.

At S43, the UDR 4 receives the Nudr_DM_Query request message from the PCF 5 and transmits the subscription data of the UE 50 to the PCF 5 together with the Nudr_DM_Query response message. The subscription data of the UE 50 also includes the Energy Related Subscription data. The PCF 5 receives the subscription data of the UE 50 from the UDR 4 (Fig. 7, OP12).

At S44, the PCF 5 determines that the UE 50 is an energy-aware UE from Energy Related Subscription data of the UE 50 (Fig. 7, OP13: YES). At S45, the PCF 5 generates policies based on the Energy Related Subscription data of the UE 50. For example, when the trigger for generation of the policies is reception of a request from the AMF 7, the PCF 5 generates Access and mobility related policy information, for example, based on the Energy Related Subscription data such that the energy requirements in the Energy Related Subscription data of the UE 50 are satisfied, and transmits the Access and mobility related policy information to the AMF 7. For example, when the trigger for generation of the policies is reception of a request from the SMF 6, the PCF 5 generates, for example, PDU session related policy information and PCC rules such that the energy requirements in the Energy Related Subscription data of the UE 50 are satisfied, and transmits the PDU session related policy information and PCC rules to the SMF 6.

In the example illustrated in Fig. 10, the policies generated by the PCF 5 are generated such that the energy requirements in the Energy Related Subscription data of the UE 50 are satisfied. Since each of the AMF 7 and the SMF 6 executes its own process related to communication of the UE 50 according to the policies generated by the PCF 5, the communication of the UE 50 becomes such communication that satisfies the energy requirements in the Energy Related Subscription data of the UE 50.

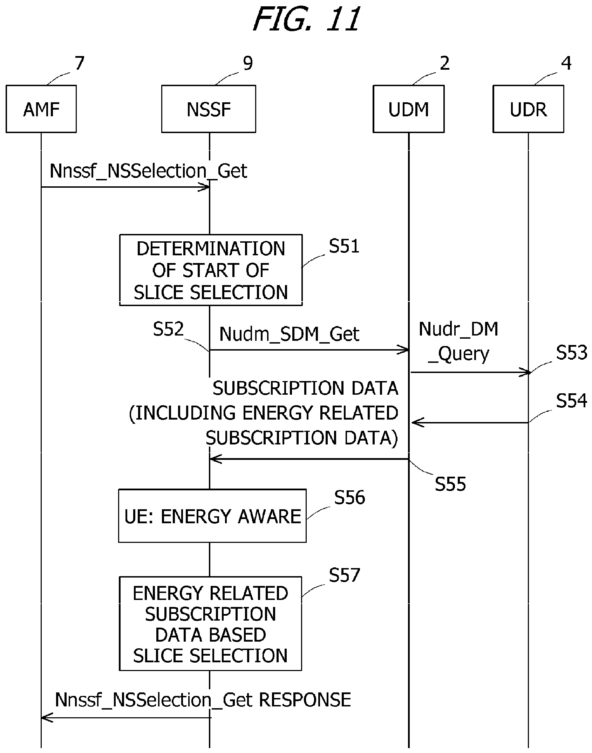

Fig. 11 is a diagram illustrating an example of a sequence of energy-related-subscription-data-based network slice selection process. In the example illustrated in Fig. 11, the user NF 10 is the NSSF 9. At S51, the NSSF 9 detects occurrence of an event that triggers start of the network slice selection process, and determines to start the network slice selection process (Fig. 7, OP11: YES).

Events that trigger start of the network slice selection process includes, for example, reception of an Nnssf_NSSelection_Get request message, which is a request to select a network slice to be used for communication of a UE 50, from the AMF 7, the SMF 6, or the NWDAF 8, by the NSSF 9. In Fig. 11, it is illustrated that the Nnssf_NSSelection_Get request message is received from the AMF 7, as an example.

At S52, the NSSF 9 transmits the Nudm_SDM_Get request message, which is a request to acquire subscription data, to the UDM 2 in order to acquire Energy Related Subscription data of the UE 50. Together with the Nudm_SDM_Get request message, identification information (SUPI) about the UE 50 and information indicating that the type of the acquisition target subscription data is Energy Related Subscription data are also transmitted.

At S53, the UDM 2 receives the Nudm_SDM_Get request message from the user NF 10 and transmits an Nudr_DM_Query request message, which is a request to acquire the subscription data, to the UDR 4. Together with the Nudr_DM_Query request message, the identification information (SUPI) about the UE 50 and the information indicating that the type of the acquisition target subscription data is Energy Related Subscription data are also transmitted. At S54, the UDR 4 receives the Nudr_DM_Query request message from the UDM 2 and transmits the Energy Related Subscription data of the UE 50 to the UDM 2 together with the Nudr_DM_Query response message.

At S55, the UDM 2 receives the Energy Related Subscription data of the UE 50 from the UDR 4 together with the Nudr_DM_Query response message, and transmits the Energy Related Subscription data of the UE 50 to the NSSF 9 together with the Nudm_SDM_Get response message. The NSSF 9 receives the Energy Related Subscription data of the UE 50 from the UDM 2 (Fig. 7, OP12).

At S56, the NSSF 9 determines that the UE 50 is an energy-aware UE from the Energy Related Subscription data of the UE 50 (Fig. 7, OP13: YES). At S57, the NSSF 9 executes the network slice selection process based on the Energy Related Subscription data of the UE 50 (Fig. 7, OP14). When Energy Related data of each network slice is requested in the network slice selection process, the NSSF 9 may acquire the Energy Related data from the NWDAF 8 (see Fig. 9). The NSSF 9 transmits candidates for a network slice to be used for communication of the UE 50 to the request source NF (in Fig. 11, the AMF 7) together with the Nnssf_NSSelection_Get response message. The number of network slice candidates may be one or may be more.

In the example illustrated in Fig. 11, such a network slice that satisfies the energy requirements included in the Energy Related Subscription data of the UE 50 is selected as a network slice to be used for communication of the UE 50, by the NSSF 9. Thereby, communication of the UE 50 is performed using a network slice that satisfies the energy requirements included in the Energy Related Subscription data of the UE 50, and the communication of the UE 50 becomes such communication that satisfies the energy requirements included in the Energy Related Subscription data of the UE 50. When there is no network slice that satisfies the energy requirements included in the Energy Related Subscription data of the UE 50, the NSSF 9 may select, among network slices, such a slice that the energy efficiency, energy consumption or renewable energy use ratio thereof are the closest to thresholds set in the energy requirements.

### <Operation and effects of first embodiment>

In the first embodiment, the Energy Related Subscription data of each UE 50 is held in the UDR 4 as one of the pieces of subscription data, and used for the process related to communication of the UE 50 executed by each NF. Thereby, it is possible to provide such communication that satisfies the energy requirements included in the Energy Related Subscription data of the UE 50, for the UE 50.

### <Other Embodiments>

The embodiments described above are examples, and the present disclosure may be changed and carried out as appropriate without departing from the gist of the present disclosure.

The processes and means described in the present disclosure may be freely combined to the extent that no technical conflict exists.

A process which is described to be performed by one device may be performed among a plurality of devices. Processes described to be performed by different devices may be performed by one device. Each function to be implemented by a hardware component (server component) in a computer system may be flexibly changed.

The present disclosure may also be implemented by supplying a computer program for implementing a function described in the embodiment above to a computer, and by reading and executing the program by at least one processor of the computer. Such a computer program may be provided to a computer by a non-transitory computer-readable storage medium which is connectable to a system bus of a computer, or may be provided to a computer through a network. The non-transitory computer-readable storage medium may be any type of disk such as a magnetic disk (floppy (registered trademark) disk, a hard disk drive (HDD), etc.), an optical disk (CD-ROM, DVD disk, Blu-ray disk, etc.), a read only memory (ROM), a random access memory (RAM), an EPROM, an EEPROM, a magnetic card, a flash memory, an optical card, and any type of medium which is suitable for storing electronic instructions.

Clause 1. A system comprising:
a first NF (Network Function) configured to hold, for each of a plurality of user terminals, first information including conditions related to energy in communication; and
a second NF configured to perform, based on the first information about a first user terminal included among the plurality of user terminals, a predetermined process related to communication of the first user terminal.

Clause 2. The system according to Clause 1, wherein
the first information is one of pieces of subscription data.

Clause 3. The system according to Clause 1, wherein
the conditions related to energy in communication include at least any of a condition about energy consumption, a condition about energy efficiency, and a condition about use of renewable energy.

Clause 4. The system according to Clause 3, wherein
the first information includes information indicating priority order among the condition about energy consumption, the condition about energy efficiency, and the condition about use of renewable energy.

Clause 5. The system according to Clause 1, wherein
the first information is registered with the first NF when a contract related to communication of a user terminal is concluded.

Clause 6. The system according to Clause 1, further comprising
a third NF configured to transmit, for the first user terminal, a request to update the first information, wherein
when receiving the request to update the first information about the first user terminal, the first NF updates the first information about the first user terminal.

Clause 7. The system according to Clause 1, wherein
as the predetermined process, the second NF performs processing for selecting a fourth NF configured to perform a process related to communication of the first user terminal, among a plurality of fourth NFs, based on the first information about the first user terminal.

Clause 8. The system according to Clause 7, wherein
the second NF is an AMF (Access and Mobility Management Function); and
the fourth NF is any of an SMF (Session Management Function), an AMF, and a PCF (Policy Control Function).

Clause 9. The system according to Clause 7, wherein
the second NF is an SMF; and
the fourth NF is any of a UPF (User Plane Function) and a PCF.

Clause 10. The system according to Clause 1, wherein
the second NF is a PCF; and
as the predetermined process, the second NF performs processing for generating policies related to communication of the first user terminal based on the first information about the first user terminal.

Clause 11. The system according to Clause 1, wherein
the second NF is an NSSF (Network Slice Selection Function); and
as the predetermined process, the second NF performs processing for selecting a network slice used for communication of the first user terminal based on the first information about the first user terminal.

Clause 12. A method comprising:
holding, by a first NF (Network Function),for each of a plurality of user terminals, first information including conditions related to energy in communication; and
performing, by a second NF, based on the first information about a first user terminal included among the plurality of user terminals, a predetermined process related to communication of the first user terminal.

Clause 13. The method according to Clause 12, wherein
the first information is one of pieces of subscription data.

Clause 14. The method according to Clause 12, wherein
the conditions related to energy in communication include at least any of a condition about energy consumption, a condition about energy efficiency, and a condition about use of renewable energy.

Clause 15. The method according to Clause 14, wherein
the first information includes information indicating priority order among the condition about energy consumption, the condition about energy efficiency, and the condition about use of renewable energy.

Clause 16. The method according to Clause 12, further comprising:
transmitting, by a third NF, for the first user terminal, a request to update of the first information; and
updating, by the first NF, when receiving the request to update the first information about the first user terminal, the first information about the first user terminal.

Clause 17. The method according to Clause 12, wherein
as the predetermined process, the second NF performs processing for selecting a fourth NF configured to perform a process related to communication of the first user terminal, among a plurality of fourth NFs, based on the first information about the first user terminal.

Clause 18. The method according to Clause 17, wherein
the second NF is an AMF (Access and Mobility Management Function); and
the fourth NFs is any of an SMF (Session Management Function), an AMF, and a PCF (Policy Control Function).

Clause 19. The method according to Clause 17, wherein
the second NF is an SMF; and
the fourth NFs is any of a UPF (User Plane Function) and a PCF.

Clause 20. The method according to Clause 12, wherein
the second NF is a PCF; and
as the predetermined process, the second NF performs processing for generating policies related to communication of the first user terminal based on the first information about the first user terminal.

## Claims

1. A system (100) comprising:
a first Network Function NF (4) configured to hold, for each of a plurality of user terminals (50), first information including conditions related to energy in communication; and
a second NF (5, 6, 7, 9) configured to perform, based on the first information about a first user terminal (50) included among the plurality of user terminals (50), a predetermined process related to communication of the first user terminal (50).

2. The system according to claim 1, wherein
the first information is one of pieces of subscription data.

3. The system according to claim 1 or claim 2, wherein
the conditions related to energy in communication include at least any of a condition about energy consumption, a condition about energy efficiency, and a condition about use of renewable energy.

4. The system according to claim 3, wherein
the first information includes information indicating priority order among the condition about energy consumption, the condition about energy efficiency, and the condition about use of renewable energy.

5. The system according to any of claim 1 to 4, wherein
the first information is registered with the first NF (4) when a contract related to communication of a user terminal (50) is concluded.

6. The system according to any of claim 1 to 5, further comprising
a third NF (1) configured to transmit, for the first user terminal (50), a request to update the first information, wherein
when receiving the request to update the first information about the first user terminal (50), the first NF (4) updates the first information about the first user terminal (50).

7. The system according to any of claims 1 to 6, wherein
as the predetermined process, the second NF (6, 7) performs processing for selecting a fourth NF (5, 6, 7) configured to perform a process related to communication of the first user terminal (50), among a plurality of fourth NFs, based on the first information about the first user terminal (50).

8. The system according to claim 7, wherein
the second NF is an Access and Mobility Management Function AMF (7); and
the fourth NF is any of an Session Management Function SMF (6), an AMF (7), and a Policy Control Function PCF (5).

9. The system according to claim 7, wherein
the second NF is an SMF (6); and
the fourth NF is any of a User Plane Function UPF and a PCF (5).

10. The system according to claim 1, wherein
the second NF is a PCF (5); and
as the predetermined process, the second NF (5) performs processing for generating policies related to communication of the first user terminal (50) based on the first information about the first user terminal (50).

11. The system according to claim 1, wherein
the second NF is an Network Slice Selection Function NSSF (9); and
as the predetermined process, the second NF (9) performs processing for selecting a network slice used for communication of the first user terminal (50) based on the first information about the first user terminal (50) .

12. A method comprising:
holding, by a first Network Function NF (4), for each of a plurality of user terminals (50), first information including conditions related to energy in communication; and
performing, by a second NF (5, 6, 7, 9), based on the first information about a first user terminal (50) included among the plurality of user terminals (50), a predetermined process related to communication of the first user terminal (50).

13. The method according to claim 12, wherein
the first information is one of pieces of subscription data.

14. The method according to claim 12 or to claim 13, further comprising:
transmitting, by a third NF, for the first user terminal (50), a request to update of the first information; and
updating, by the first NF (4), when receiving the request to update the first information about the first user terminal (50), the first information about the first user terminal (50).

15. The method according to any of claims 12 to claim 14, wherein
as the predetermined process, the second NF (5, 6, 7, 9) performs processing for selecting a fourth NF configured to perform a process related to communication of the first user terminal (50), among a plurality of fourth NFs, based on the first information about the first user terminal (50).
